(19) Europäisches Patentamt
European Patent Office
Office européen des brevets

(11) **EP 1 191 415 B1**

(12) **EUROPÄISCHE PATENTSCHRIFT**

(45) Veröffentlichungstag und Bekanntmachung des Hinweises auf die Patenterteilung:
**13.04.2011 Patentblatt 2011/15**

(51) Int Cl.:
*G05D 1/00* *(2006.01)*

(21) Anmeldenummer: **01122189.2**

(22) Anmeldetag: **17.09.2001**

(54) **Flugkontrollsystem**

Flight control system

Dispositif de commande de vol

(84) Benannte Vertragsstaaten:
**AT BE CH CY DE DK ES FI FR GB GR IE IT LI LU MC NL PT SE TR**

(30) Priorität: **18.09.2000 DE 10046007**

(43) Veröffentlichungstag der Anmeldung:
**27.03.2002 Patentblatt 2002/13**

(73) Patentinhaber: **EADS Deutschland GmbH**
**81663 München (DE)**

(72) Erfinder: **Westphal, Peter, Dr.**
**80335 München (DE)**

(56) Entgegenhaltungen:
**US-A- 5 710 559      US-A- 5 983 161**
**US-A- 6 114 976**

- **HUNGENAHALLY S. K.: "Virtual cockpit: fuzzy neural networks in visual perception" 1995 IEEE INTERNATIONAL CONFERENCE ON NEURAL NETWORKS PROCEEDINGSPERTH, WA, AUSTRALIA, Bd. 1, 27. November 1995 (1995-11-27), Seiten 27-31, XP002317810 NEW YORK, NY, USA**
- **MORGAN, J.; MILLER, J.;: "MD-11 Electronic Instrument System" PROCEEDINGS IEEE 11TH DIGITAL AVIONICS SYSTEMS CONFERENCE, 5. Oktober 1992 (1992-10-05), Seiten 248-253, XP002317815 NEW YORK, NY, USA**
- **SHANEYFELT W: "THE HELICOPTER PILOT'S EMERGENCY SITUATION ADVISOR" SCIENTIFIC HONEYWELLER, HONEYWELL'S CORPORATE. MINNEAPOLIS, US, Bd. 9, Nr. 1, 21. Juni 1988 (1988-06-21), Seiten 43-49, XP000128049 ISSN: 0196-8440**
- **HARRISON L H ET AL: "ARTIFICIAL INTELLIGENCE AND EXPERT SYSTEMS FOR ACIONICS" PROCEEDINGS OF THE AIAA/IEEE DIGITAL AVIONICS SYSTEMS CONFERENCE. NEW YORK, OCT. 25 - 28, 1993, NEW YORK, IEEE, US, Bd. CONF. 12, 25. Oktober 1993 (1993-10-25), Seiten 167-172, XP000451655**
- **WALSDORF A; PUTZER H; ONKEN R: "The cognitive process and its application within cockpit assistant systems" PROCEEDINGS 1999 IEEE INTERNATIONAL CONFERENCE ON INTELLIGENT TRANSPORTATION SYSTEMS, 5. Oktober 1999 (1999-10-05), Seiten 874-879, XP002317809 PISCATAWAY, NJ, USA**

**Beschreibung**

Die Erfindung betrifft ein Flugkontrollsystem gemäß dem Oberbegriff des Patentanspruchs 1

Flugzeuge mit modernen Flugkontrollsystemen zählen zu den technischen Pionierleistungen unserer Zeit. Wenige Technologien bergen eine derartige Komplexität und Perfektion an Umsetzung von Ingenieurwissen in die Realisierung neuer Systeme.

Flugkontrollsysteme welche dem Piloten eines Flugzeugs Handlungsempfehlungen geben sind aus US 5,983,161 und dem Artikel von HUNGENAHALLY S.K.;"Virtual cockpit:fuzzy neural networks in visual perception" 1995 IEEE INTERNATIONAL CONFERENCE IN NEURAL NETWORKS PROCEEDINGS PERTH, WA, AUSTRA-LIA, Bd. 1, 27.11.1995, Seiten 27-31, XP002317810 Ney York, USA bekannt.

Doch trotz aller Perfektion kommt es immer wieder zu Flugzeugabstürzen. Nach einer Gesamtanlyse des Fluges werden dann die Ursachen für den stattgefundenen Flugunfall ermittelt und Konsequenzen aus den Abstürzen gezogen, um diese Ursachen durch geänderte Verfahren und Systemveränderungen für zukünftige Flüge ausschliessen zu können. Diese Resultate haben den Flugverkehr zwar sicherer gemacht, doch neue Unfälle aufgrund von neuen Ursachen, sowie von nicht behobenen Unfallursachen wird es damit auch weiterhin geben. Die Konsequenzen der Ursachen sind teilweise schon bekannt, können aber erneut auftreten, da es mit konventionellen Techniken nicht möglich ist, auf die Kombination von Unfallursachen erneut richtig zu reagieren.
Das bedeutet, dass sich Unfallhergänge wiederholen können, da das entstandene Wissen über Unfälle nicht ausreichend in die Flugzeuge implementiert wurde.

Andererseits entstehen neue Unfälle durch neue, unvorhergesehene Ursachenkombinationen. Das sind Kombinationen, die nur grob im vorhinein von Spezialisten abgeschätzt werden können, da man nur ungefähre Vorstellungen des Systemverhaltens besitzt.

Weiterhin kann Systemverhalten nicht ausreichend genug in den Analysen einbezogen worden sein, da ein Auftreten bis zum Flugunfall nicht als möglich erachtet wurde, weil die Querverbindungen von Systemfehlfunktionen und menschlichem Bedienverhalten vorher nicht analysiert worden sind. Zumindest ist dieses Systemverhalten nicht in ein Schutz- oder Warnsystem implementiert worden und im besten Fall existieren Berichte über die Auswirkungen der Fehlfunktionen.

In bekannten rechnergestützten Flugkontrollsystemen erfolgt eine Beurteilung der Konsequenzen aus Kombinationen von gewonnenen Flug- und Systemparameter mittels einer Implementierung existierender Sicherheitsanalysen, die aber nicht aktiv im Algorithmus der Flugkontrollsysteme integriert sind.

Mit diesen Flugkontrollsystemen ist sich der Pilot im kritischen Augenblick der Gefährlichkeit einer Flugsituation oft nicht bewußt. Und wenn er doch gewarnt wird, dann ist nicht gesichert, dass er die der Situation angepasste unfallvermeidende Handlung rechtzeitig erkennt und ausführt.

Wenn der Pilot im entscheidenden Moment gewarnt wird, dann erhält er eine Flut von Informationen - wichtige und unwichtige - aus der er in einer Stresssituation unter höchstem Zeitdruck die richtigen Schlüsse ziehen muss, mitunter mit fatalen Konsequenzen.

Aufgabe der Erfindung ist es, ein Flugkontrollsystem zu schaffen, das im Cockpit installiert, selbsttätig sicherheitskritische Flugzustände erkennt und dem Piloten rechtzeitig beratende Hinweise zur Korrketur dieser Flugzustände übermittelt.

Diese Aufgabe wird erfindungsgemäß durch die Merkmale des Patentanspruchs 1 gelöst. Weiterbildungen der Erfindung sind in den Unteransprüchen angegeben.

Die grundsätzliche Idee der erfindungsgemäßen Lösung besteht darin, im Flugzeug zusätzlich einen parallel zur Flugregelung mitlaufenden Computer zu implementieren, der als wachsamer Beobachter Flug- und Systemparameter überwacht. Eine Auswertung der erfassten Daten erfolgt im Gegensatz zum Crashrekorder nicht erst Wochen nach einem Flugunfall durch Experten am Boden, sondern es werden daraus während des Fluges mit dem Computer automatisch kontinuierlich Risikoabschätzungen durchgeführt und Handlungsempfehlungen für den Piloten ausgegeben.

Mit der erfindungsgemäßen Lösung steht das gesamte Expertenwissen dem Piloten in Echtzeit zur Verfügung und kann somit Entscheidungsgrundlage für die wichtigsten unfallverhindernden Maßnahmen sein. Dabei muss das System in der Lage sein, das Expertenwissen zu implementieren. Und zwar genau in der Form, wie Expertenwissen verfügbar ist, um solche Vorgänge zu beurteilen zu können.

In vorteilhafter Weise wendet das erfindungsgemäße Flugkontrollsystem eine auf linguistischen Regeln basierende Fuzzy Logik an. Fuzzy Systeme sind sehr tolerant gegenüber Fehlern und Bereichsdefinitionen und eignen sich deshalb besser als die Verwendung von scharfen Schwellwerten, wenn es darum geht einen Überblick über potentielle gute und schlechte Systemzustände zu erhalten. Scharfe Schwellwerte versagen bei der kleinsten undefinierten Überschreitung ihrer Definitionsbereiche.

Insbesondere können gerade mit der Fuzzy Logik die unterschiedlichsten Flug- und Systemparameter verknüpft werden. Ebenfalls wird damit die in bekannten Flugkontrollsystemen bestehende Problematik mit den Warnschwellwerten aufgeweicht, ohne jedoch dabei die notwendige Präzision zu verlieren. Erreicht wird der letztgenannte Vorteil erfindungsgemäß durch eine Doppelbelegung der Regeln in konventioneller Art und in Fuzzy Logik.

Das erfindungsgemäße Flugkontrollsystem hat eine offene Struktur, mit der neues Wissen über Flugunfälle oder neue Systemerkenntnisse mit geringem Aufwand und in übersichtlicher Form zu implementieren sind.

Anhand der Zeichnung werden nachstehend Ausführungsbeispiele der Erfindung näher erläutert.

Fig.1    zeigt das Prinzip des Flugkontrollsystemes und

Fig.2    zeigt das Display des Flugkontrollsystemes und

Fig.3    zeigt ein Beispiel für die Generierung einer Top Level Warnung in dem Flugkontrollsystem.

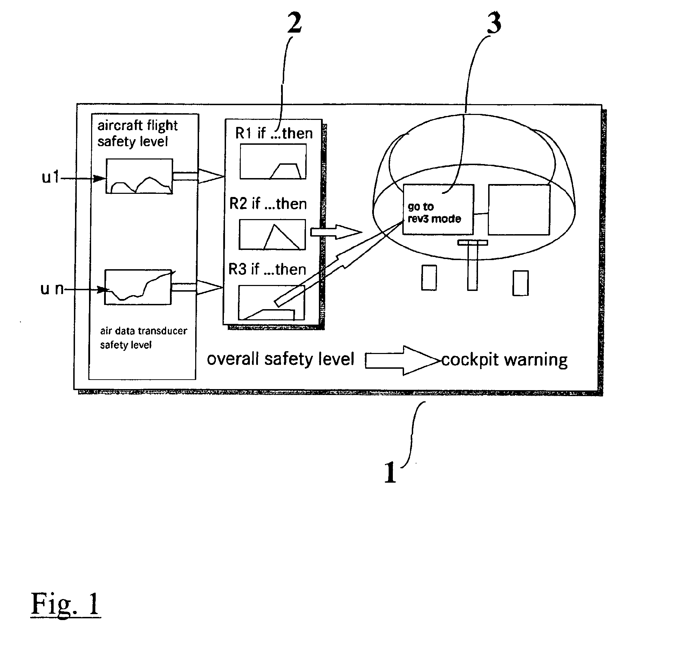

Das in Fig.1 gezeigte Flugkontrollsystem 1 ist als ein Cockpit-Warnsystem ausgebildet, das durch die Auswertung von Eingangsdaten $u_1$ bis $u_n$ unter Verwendung von Fuzzy Logik 2 potentielle Risikokombinationen erkennt, den erkannten Risikoinformationen Prioritäten zuordnet und dem Piloten zeitkritisch die wichtigste, unfallvermeidende Informatione in der Form einer Handlungsanweisung 3 zur Verfügung stellt.

Das erfindungsgemäße Flugkontrollsystem besteht aus parallel zur Flugregelung mitlaufenden Computer, der als wachsamer Beobachter Flug- und Systemparameter überwacht.

Es basiert zum einen auf hochkomplexen Wissen aus durchgeführten, aufwendigen Simulationsanalysen an Einzelkomponenten von Flugzeugen sowie aus Fehlerbaumanalysen. Die Implementierung dieses Wissens ist kosten- und zeitgünstig mittels der in dem Flugkontrollsystem verwendeten Fuzzy Logik durchführbar.

Andererseits basiert das Flugkontrollsystem auf äußerst trivialem Wissen, wie beispielsweise der Tatsache, dass negative Geschwindigkeitswerte bei einem Flugzeug keine sinnvollen Senordaten sein können. Derartiges Wissen ist in bekannten Flugkontrollsystemen nicht als logische Schutzfunktion implementiert, obwohl die Berücksichtigung derartig unlogischer Werte bei Flugunfällen immer wieder in ihnen festgestellt werden - z.B. bei den Unfällen A320 Warschau, Lauda Air, X-31 und Birgen Air

Das erfindungsgemäße Flugkontrollsystem zieht aus solchen an und für sich unsinnigen Daten Schlüsse auf Ausfallkombinationen und geeignete Verhinderungsmaßnahmen und kann außerdem daraus Entscheidungen für die Umschaltung von Flight Modes treffen.

Nachstehend sind vier ausgesuchte mögliche Beispiele für zu implementierendes, analysiertes Wissen über sicherheitskritische Flugzustände mit der Angabe der Art der Informationsquelle und zugeordneten Risikoklasse angegeben.

-    Ereignis E1: Wenn die Geschwindigkeit zwischen Mach 0.7 und Mach 0.9 liegt und der Anstellwinkel größer als 20 Grad ist und die Höhe unter 10000 feet beträgt, dann ist der Flughöhe zu vergrößern, da sonst ein Verlust der Stabilität auftritt. Informationsquelle: Wissen zu Fluglimitationen. Risikoklasse 1.

-    Ereignis E2: Anstellwinkel höher als 35 Grad oder massive schlagartige Anstellwinkelveränderungen führen zum Flugzeugverlust. Die Basis der Bewertungen sind flugmechanische Untersuchungen der Stabilität. Informationsquelle: Wissen zum Flugkontrollsystem. Risikoklasse 2.

-    Ereignis E3: Aus den Unfallanalysen der X-3 1 weiß man, dass ein vereistes Pitotrohr zu gravierenden Geschwindigkeitsdatenfehlmessungen des Flugkontrollsystemsführt, die in ihrer Konsequenz bei Hochleistungsflugzeugen zu einem Departure (Kontrollverlust) führen können. Dabei treten für die Pitotdruckwerte unsinnige Verhältnisse auf : beispielsweise ist ps größer als pt. Informationsquelle: Wissen aus dem Luftdatensystem. Risikoklasse 1

-    Ereignis E4: Das Fahrwerk muß bei Geschwindigkeiten über 300 Knoten eingefahren werden. Informationsquelle: Wissen über Fahrwerksysteme. Risikoklasse 2

Derart unterschiedliches Wissen wird erfindungsgemäß mittels der Fuzzy Logik gesamtintegrierend verfolgt und verknüpft. Bei Verwendung der Fuzzy-Logik ist die exakte mathematische Definition und Modellierung solcher Vorgänge nicht notwendig, sondern solche Wissensbasen können direkt in der linguistischen Form übernommen werden, ohne daß jedoch die notwendige Präzision und Signifikanz des Monitoring dieser Aussagen dabei verloren geht. Dies ist ein vorteilhaftes Merkmal der erfindungsgemäßen Lösung, denn es gibt genügend Beispiele aus komplexen technischen Systemen, bei denen ein exaktes Modellieren nicht möglich ist.

Durch die Verwendung von Einzelregeln, welche eine abgeschlossene Sicherheitsinformation mit Einzelkonsequenzbelegung für alle potentiellen Warnungen beinhalten, wird die Kombinationsfähigkeit und flexible Wissensimplementierung der Regelbasis gewährleistet. Die Übersichtlichkeit und Überprüfbarkeit der Wissensstruktur wird somit Regel für Regel überprüfbar.

Entsteht neues Wissen, beispielsweise aus einem Flugversuch, welches eventuell gar nicht mit den bisherigen Ein- und Ausgangsdaten des Flugkontrollsystemes konform scheint, so kann es dennoch mit einem einzigen neuen Satz in linguistischer Form, unter Hinzunahme des nun benötigten Inputs und Outputs, implementiert werden. Dies läßt die vorher existierende Regelstruktur völlig unberührt und das Flugkontrollsystem ist lediglich um eine Erkenntnis reicher geworden, die sich automatisch in die existierende Wissensbasis einfügt und trotzdem in allen Querverbindungen berücksichtigt wird. Nur wenn die Regel mit ihrer speziellen Parameterkombination angesprochen wird, ist sie auch aktiv und trägt ihren in ihrer Erkenntnis definierten Beitrag zum Gesamtbild des Flugzeugbeurteilungsprozesses bei.

Bei der Wahl der Eingangsgrößen sind die folgenden Überlegungen berücksichtigt :

- Anhand welcher Daten erhält man den größtmöglichen Überblick über das gesamte Flugzeug?
- Wie wird der aktuelle Flugzeugzustand und Systemzustand am genauesten repräsentiert?
- Wie erhält man ungefilterten und unverfälschten Statusüberblick über Fehlfunktionen?

Es ist zu überlegen, ob optische Überwachungssysteme, beispielsweise für die tatsächlichen Flaperon-Positionen oder für die tatsächliche existierende Fluglage oder Bodenannäherung verwendet werden können. Da solche Systeme jedoch selbst noch im Entwicklungsstadium sind und deren Umsetzung derzeit auch an Grenzen der Computerhardware stößt, sind sie in der erfindungsgemäßen Lösung bisher nicht berücksichtigt; sie können aber grundsätzlich zukünftig in das gewählte Eingangsgrößenfeld integriert werden.

Die gewählten Eingangsgrößen stellen sämtliche verfügbaren elektronischen Signale/Flugdaten dar, über die ein Flugzeug verfügt. Es handelt sich dabei um Subsystemdaten von:

- Flugkontrollsystemdaten der FCC's
- Luftdatensystemsensoren
- Warnsystemdaten der Avionik
- Fahrwerk
- Lebenserhaltungssytemen
- Cockpit Interface
- Weapon System
- Flug Test Instrumentierung
- Crash Rekorder
- Hydraulik
- Treibstoffsysteme (Fuel)
- Antriebe (EJ200)
- Struktursensoren (Loads)

Für eine erfindungsgemäße Verwendung der vorangehend genannten Wissensbasen zu den Ereignissen E1 bis E4 werden beispielsweise in dem Flugkontrollsystem die folgenden Rohflugdaten verwendet:

1. ps — Statischer Druck der Air Data Transducer (hPa)
2. pt — Totaldruck der Air Data Transducer (hPa)
3. qc — Differentieller Druck der Air Data Transducer (hPa)
4. Altitude — Höhe der Luftdaten Computer Höhenmessung (feet)
5. KDAS — Kalibrierte Fluggeschwindigkeit der Luftdaten Computer (knots)
6. Mach — Fluggeschwindigkeit der FCC Messungen (mach number)
7. AOA — Flugzeug Anstellwinkel der FCC Messungen (degree)
8. LG — Fahrwerksparameter (0,1) Eingefahren / Ausgefahren

Durch die Verwendung unterschiedlichster Daten für ein einziges Kontroll- und Warnsystem eröffnet sich ein hohes Maß an Flexibilität und Analysepotential.

Jede Regel des erfindungsgemäßen Flugkontrollsystemes benutzt bei der Anwendung der Fuzzy Logik nur die jeweils regelspezifisch benötigten Daten, ohne in Konflikt mit unbenötigten Daten zu kommen. Dies vereinfacht die Struktur des Flugkontrollsystemes, ohne dazu in aufwendiger Weise detaillierte Eingangsdefinitionen im Computercode zu benötigen.

Der Signalfluß der Eingangsdaten wird von der Fuzzy Logik Regel für Regel ausgewertet, egal ob sie nun richtig oder fehlerhaft sind. Die Regelbasis des Flugkontrollsystemes ist Satz für Satz in Einzelerkenntnisse aufgeteilt, die in beliebiger Reihenfolge Einzelsystemerkenntnisse und deren Handlungskonsequenzen beinhalten.Diese Regeln repräsentieren das Systemingenieurswissen. Dabei ist es möglich, dass eine Regel nur eines der Eingangssignale oder dass eine andere Regel mehrere der Signale benötigt, um durch Quervergleiche richtige Schlüsse ziehen zu können.

Die Fuzzyfizierung von Flugbereichen stellt einen auf grafischer Basis einfach durchzuführenden Vorgang dar, der nach erfolgter Fuzzyfizierung automatisch mittels des Fuzzy Interferenzsystemes in Computercode für das Flugkontrollsystem umgeformt wird.

Diese Transformation wird durch die Aufstellung der Erkenntnisse in IF - THEN Regeln vollzogen. Dabei müssen die IF-Bedingungen mit Membership Funktionen bezüglich des jeweiligen Eingangssignales definiert werden. Durch AND und OR Verknüpfungen können in einer Regel auch mehrere Parameter verbunden werden, da in den meisten Fällen einer Handlungsanweisung eine Aussage nur bei gleichzeitiger Erfüllung mehrerer kombinierter Bedingungen zutrifft. Im THEN-Teil der Regeln ist die der Regel zugeordneten Konsequenz beinhaltet.

Die Konsequenz beinhaltet die entsprechende Priorität der gewählten Handlung, um Flugparameter oder Systemstatuszustände, die Bestimmung der Handlung selbst, sowie das Risiko der System und Flugparameterkombination zu ändern.

Nachstehend ist ein Beispiel für einen erfindungsgemäßen Regelbasisdatensatz bestehend aus 26 Regeln mit den Warnmeldungen, Flugbereichsdefinitionen und Gesamtrisikobestimmungen aufgelistet :

1. If (mach is min) or (alt is altin) or (kdas is kin) or (aoa is aoain) or (landgear is lgin) or (qc is qcin) or (ps is psin) or (pt is ptin) then (risk is low)(aoawarn is low)(overspeedwarn is low)(lowspeedwarn is low)(revmodewarn is low)(lgretractwarn is low)(altwarn is low) (1)

2. If (mach is mst) or (kdas is kst) then (risk is med)(aoawarn is low)(overspeedwarn is low)(lowspeedwarn is med)(revmodewarn is low)(lgretractwarn is low)(altwarn is low) (1)

3.If (mach is mstm) or (kdas is kstm) then (risk is high) (aoawarn is low)(overspeedwarn is low)(lowspeedwarn is high) (revmodewarn is low)(lgretractwarn is low)(altwarn is low) (1)

4.If (mach is mspo) or (kdas is kspo) then (risk is med) (aoawarn is low)(overspeedwarn is med)(lowspeedwarn is low) (revmodewarn is low)(lgretractwarn is low)(altwarn is low) (1)

5.If (mach is mspom) or (kdas is kspom) then (risk is high) (aoawarn is low)(overspeedwarn is high)(lowspeedwarn is low) (revmodewarn is low)(lgretractwarn is low)(altwarn is low) (1)

6.If (mach is maoal) and (aoa is aoarl) then (risk is med) (aoawarn is med)(overspeedwarn is low)(lowspeedwarn is low) (revmodewarn is low)(lgretractwani is low)(altwarn is low) (1)

7.If (mach is maoa2) and (aoa is aoar2) then (risk is med) (aoawarn is med)(overspeedwarn is low)(lowspeedwarn is low) (revmodewarn is low)(lgretractwarnn is low)(altwarn is low) (1)

8.If (mach is maoa3) and (aoa is aoar3) then (risk is med) (aoawarn is med)(overspeedwarn is low)(lowspeedwam is low) (revmodewarn is low)(lgrelractwarn is low) (altwarn is low) (1)

9. If (aoa is aoar4) then (risk is med)(aoawarn is med) (overspeedwarn is low)(lowspeedwarn is low)(revmodewarn is low) (lgretractwarn is low)(altwarn is low) (1)

10. If (aoa is aoaepm) then (risk is high) (aoawarn is high) (overspeedwarn is low)(lowspeedwarn is low)(revmodewarn is low)(lgretractwarn is low)(altwarn is low) (1)

11. If (aoa is aoaenm) then (risk is high)(aoawarn is high) (overspeedwarn is low)(lowspeedwarn is low)(revmodewarn is low)(lgretractwarn is low)(altwarn is low)(1)

12. If (mach is migs) and (alt is altlg) and (kdas is klg) and (landgear is lgout) then (risk is med)(aoawarn is low) (overspeedwarn is low)(lowspeedwarn is low)(revmodewarn is low)(lgretractwarn is med)(altwarn is low) (1)

13.If (mach is mlgsm) and (alt is altlgm) and (kdas is klgm) and (landgear is lgout) then (risk is high)(aoawarn is low) (overspeedwam is low)(lowspeedwarn is low)(revmodewarn is low)(lgretractwarn is high)(altwarn is low) (1)

14.If (qc is qcneg) then (risk is med)(aoawarn is low) (overspeedwarn is low)(lowspeedwarn is low)(revmodewarn is med)(lgretractwarn is low)(altwarn is low)(1)

15.If (qc is qcnegm) then (risk is high)(aoawarn is low) (overspeedwarn is low)(lowspeedwarn is low)(revmodewarn is high)(lgretractwarn is low)(altwarn is low) (1)

16. If (alt is altptlow) and (ps is pslow) then (risk is high) (aoawarn is low)(overspeedwarn is low)(lowspeedwarn is low) (revmodewarn is high)(lgretractwarn is low)(altwarn is low)(1)

17. If (alt is altpshigh) and (ps is pshigh) then (risk is high) (aoawarn is low)(overspeedwarn is low)(lowspeedwarn is low) (revmodewarn is high)(lgretractwarn is low)(altwarn is low)(1)

18. If (mach is mlow) and (alt is altptlow) and (pt is pthigh) then (risk is high) (aoawarn is low)(overspeedwarn is low) (lowspeedwarn is low)(revmodewarn is high)(lgretractwarn is low)(altwarn is low)(1)

19. If (mach is mhigh) and (alt is altptlow) and (pt is ptlow) then (risk is high) (aoawarn is low) (overspeedwarn is low) (lowspeedwarn is low)(revmodewarn is high)(lgretractwarn is low)(altwarn is low) (1)

20. If(alt is altlow) then (risk is med)(aoawarn is low) (overspeedwarn is low)(lowspeedwarn is low)(revmodewarn is low)(lgretractwarn is low)(altwarn is med)(1)

21. If(alt is altlowmax) then (risk is high)(aoawarn is low) (overspeedwarn is low)(lowspeedwarn is low)(revmodewarn is low)(lgretractwarn is low)(altwarn is high)(1)

22. If(alt is althigh) then (risk is med)(aoawarn is low) (overspeedwarn is low)(lowspeedwarn is low)(revmodewarn is low)(lgretractwarn is low)(altwarn is med)(1)

23. If(alt is althighmax) then (risk is high)(aoawarn is low)(overspeedwarn is low)(lowspeedwarn is low)(revmodewarn is low)(lgretractwarn is low)(altwarn is high)(1)

24. If(mach is msr2) and (alt is altsr2) and (aoa is aoasr2) then (risk is med)(aoawarn is med)(overspeedwarn is low) (lowspeedwarn is low)(revmodewarn is low)(lgretractwarn is low) (altwarn is med) (1)

25. If(mach is mlos) and (alt is altlos) and (kdas is klos) and (aoa is aoalos) then (risk is med)(aoawarn is med) (overspeedwarn is low)(lowspeedwarn is low)(revmodewarn is low) (lgretractwarn is low)(altwarn is med) (1)

26. If (mach is mads) and (alt is altads) then (risk is high) (aoawarn is low)(overspeedwarn is high)(lowspeedwarn is low) (revmodewarn is med)(lgretractwarn is low)(altwarn is med) (1)

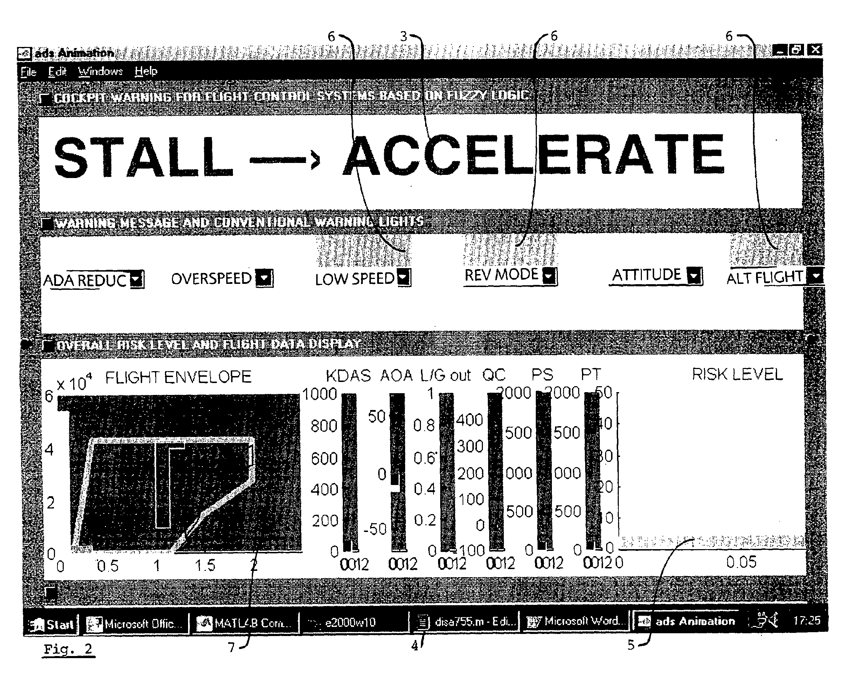

Fig.2 zeigt das Display 4 des Flugkontrollsystemes. Das Display 4 ist als ein Multi Function Head Down Display (MHHD) ausgebildet. Prinzipielle, auf dem Display angezeigte Ausgangsgröße des Flugkontrollsystemes ist das Gesamtrisikolevel 5, welches während des Fluges online mitverfolgt wird.

Da die Aussage über das Gesamtrisiko allein keinen ausreichenden Unfallschutz darstellt, ist das Gesamtrisiko aus allen Gefahrenpotentialen der einzelnen Regeln aufgebaut. Die für die aktuelle Flugsituation zutreffenden Einzelrisiken steuern ihnen zugeordnete Warnlichter 6 und kombiniert mit dem Gesamtrisikolevel entsprechende Warn- und Handlungsanweisungen 3 an, wobei letztere zusätzlich auf einem - in Fig.2 nicht berücksichtigten - Head Up Display im Cockpit angezeigt werden. Im einem auf dem Display angezeigten Flight-Envelope 7 wird die Flugzeugposition angezeigt.

Für das Beispiel der oben angegebenen Wissensbasis mit den Ereignissen E1-E4 sind folgende Funktionen der Ausgangsgrößen implementiert

- Gesamtrisikolevel - variierende Größe eines roten Balkens
- Warnlichter - rote bis zum vollen Wert ansteigende Warnlichter, welche bei Überschreitung des Schwellwertes auf rot gesetzt bleiben.

Die interne Aufteilung der Warnlichter ist dabei wie folgt ausgeführt :

1. Altitude Warning
2. AOA Warning
3. Stall Warning
4. Overspeed Warning
5. REVERSIONARY MODE Warning

6. Landing Gear Warning

Jede Warnlichtansteuerung beinhaltet das Wissen der individuellen Größe des Risikopotentials der spezifischen Warnung für den augenblicklichen Flug- und Systemzustand. Somit kann die Größe der roten Warnbalken stufenlos dem Risiko und der Handlungspriorität in Echtzeit angepaßt werden. Diese Funktion für Risiken im Bereich von 0 bis $\leq 1$ ist zur rechtzeitigen Erkennung der Annäherung an einen kritischen Zustand sinnvoll. Der numerische Wert wird als Beurteilungsgrundlage der automatischen TOP Handlungsanweisung berücksichtigt. Der Informationsgehalt mehrerer gleichzeitiger Warnungen wird dem Piloten auch bei dem verwendeten Fuzzy System nicht vorenthalten. Bei Bedarf erhält der Pilot eine präzise Anzeige der einzelnen Warnungen und deren Risikopotential in Form von an- und absteigenden roten Balken. Allerdings ist diese Funktion optional, um dem Piloten nicht mit Informationen zu überfluten.

Ab einem definierten Risikowert (Risiko $\geq 1$) einer einzelnen Warnung bleibt das individuelle Warnlicht konstant auf rot gesetzt, solange der Risikowert nicht unterschritten wird. Die TOP Handlungsanweisung hingegen basiert auf den relativen kontinuierlichen Abwägungen der Prioritäten der einzelnen Warnlichter und übernimmt die automatische Auswahl und Anzeige der wichtigsten singulären Handlungsanweisung.

Nachstehend ist das Ablaufschemata zur Erstellung der Warnungen und zur Auswahl der Top Level Handlungsanweisungen näher beschrieben. Die Eingangsdaten werden eingelesen und als Input für die Fuzzysets der Eingangsvariablen verwendet. Die Regeln sprechen nur auf eine individuell zutreffende Parameterkonstellation an. Der Erfüllungsgrad $\mu_i$ stellt das Maß des Zutreffens des Bedingungsteiles der Regel dar. Jedes einzelne individuelle Regelwissen hat potentiell Zugriff auf alle verfügbaren Warnungen. Die

$$\text{Warnungen pro Regel} \qquad W_{ij} = \mu_i \cdot c_{ij}$$

$$\text{sowie das Risiko pro Regel} \qquad Risiko_i = \sum_{j=1,2,\dots,n} W_{ij}$$

sind direkt abhängig von dem Erfüllungsgrad $\mu_i$ und den Konstanten $c_{ij}$. In den Konstanten spiegelt sich das Gefahrenpotential das Zutreffen der Parameterkombination sowie die Priorität der einzelnen Warnungen der individuellen Regel. Die Regel beschreibt den kritischen Zustand und die Warnungen /Handlungsanweisungen stellen die Lösung des Problems dar. Die reale Flugdatenparameterkombination wird allerdings auch gleichzeitig von weiteren Regeln und deren Wissensbasis betrachtet. Diese Wissensträger beurteilen den Flugzustand unter ihren individuellen Gesichtspunkten mit ihren individuellen Handlungskonsequenzen. Im allgemeinen unterscheiden sich die Erfüllungsgrade der verschiedenen Regeln bei ein und demselben Flugzustand.

Das übergeordnete Gesamtbild über den Flugzeugzustand erhält man aus der integrierten Beurteilung aller Einzelkonsequenzen. Eine individuelle Warnung A beinhaltet das gesamte Wissen aller Regeln über das Zutreffen der Warnung A. Dabei wird kontinuierlich und stufenlos ein aktuelles Maß des Zutreffens der Warnung A ermittelt.

Für $Warn_j = \sum_{j=1,2,\dots,n} W_{ij}$ mit J=A und i=Anzahl der Regeln bedeutet dies eine Addierung aller regelbezogenen Warnanteile für Warnung A. Die Warnanteile $W_{ij} = \mu_i \cdot c_{ij}$ variieren stufenlos. Eine Regel 2 erhält beispielsweise bei der aktuellen Flugdatenparameterkombination einen Warnanteil von 0.3 für Warnung A, da sie nur zu 30% = $\mu_i$ (i=2) erfüllt ist ($W_{ij} = \mu_i \cdot c_{ij} = 30\% \cdot 1 = 0.3$)und selbst bei 100%-iger Erfüllung nur maximal den Warnung A Wert von 1= $C_{ij}$ erzielen kann. Regel 3 hingegen kann einen der Risikoanalyse ensprechenden maximalen Warmwert 10=$c_{ij}$ mit (i=3) für Warnung A erhalten. Bei 100%iger Erfüllung = $\mu_i$ dieser Regel, das bedeutet bei der Flugdatenparameterkombination, welche Regel 3 vollständig erfüllt, wird der Warnwert 10 für Warnung A generiert.

Durch die Integration aller Einzelwarnungen

$$Warn_j = \sum_{j=1,2,\dots,n} W_{ij}$$

ergibt sich nun der gesamte Warnwert von Regel 2 und Regel 3 entsprechend 10+0.3 = 10.3 für Warnung A.

Ob die Warnung A jedoch auch die wichtigste Head Up Display Warnung für den aktuellen Flugzustand darstellt, kann erst durch den Vergleich mit allen anderen zu Warnung A analog ermittelten Warnungen B, C .. .N festgestellt werden.

Die Ermittlung der Topwarnung *HUDWarn = Max$_{j=A,B,\dots N}$ (Warn$_j$)* erfolgt über einen Quervergleich aller summierten Einzelwarnwerte. Zusätz-lich muß auch ein absoluter Gesamtrisikowert

$$\textit{Gesamtrisiko}_i = \sum_{i=1,2,\dots n} \textit{Risiko}_i = \sum_{j=A,B,\dots N} \textit{Warn}_i$$

überschritten werden, um sicherzustellen, daß nur Warnungen ab einer definierten minimalen Gefährlichkeit gesetzt werden. Dieser Gesamtrisikowert muß Fehlwarnungen verhindern, hat aber auch die Funktion aufaddierende Einzelwarnungen unter der Risikoschwelle zu einem eventuell doch kritischen Zustand zu identifizieren.

Die Konstanten $c_{ij}$ der Warnfelder $W_{ij} = \mu_i \cdot c_{ij}$ sind den individuellen Risikopotentialen der Parameterkombination zugeordnet. Die maximal durch ($\mu_i = 1$) erreichbaren Warnfelderkonstanten stellen den maximal der Situation zugeordneten Hazard Risk Index dar. Der einer einzelnen Regel zugeordnete Hazard Risk Index wird gleichzeitig auch dem Wert der Einzelwarnung dieser Regel zugeordnet.

Für den Benutzer oder Programmierer dieser Warnlogik im täglichen Betrieb stellt sich der gesamte Vorgang jedoch auf einer übergeordneten Ebene dar. In linguistischen Sätzen muß eine Beschreibung einer kritischen Parameterkombination eingegeben werden, sowie die Handlungskonsequenz bestimmt werden. Die Konstanten entnimmt man den aktuellen Sicherheitsanalysen. Damit wird die neue Einzelinformation in den Controller des Flugsystemes integriert und fügt sich automatisch in die existierende Wissensbasis ein.

Zur Bestimmung von Risikohäufungen wird die Sugeno Summierungsmethode der Regelkonsequenzen der Einzelregeln angewendet. Jede Regel kann von 0 stufenlos bis zum maximalen Wert (1 → MEDIUM + 10 → HIGH) = 11 in ihrer Konsequenz Warnungen und Risiken erhalten. Jeder Regeloutput für eine spezifische Handlungsanweisung wird addiert zur Gesamtpriorität der spezifischen Handlungsanweisung.

Alternativ kann dazu auch die Schwerpunktmethode eingesetzt werden. Diese stellt eine Normierung der zusammengezählten Konsequenzwerte dar, kann aber die Funktion von benötigten Risikoaddierungen nicht vollziehen. Zur Prioritätensetzung jedoch eignet sie sich ebenfalls.

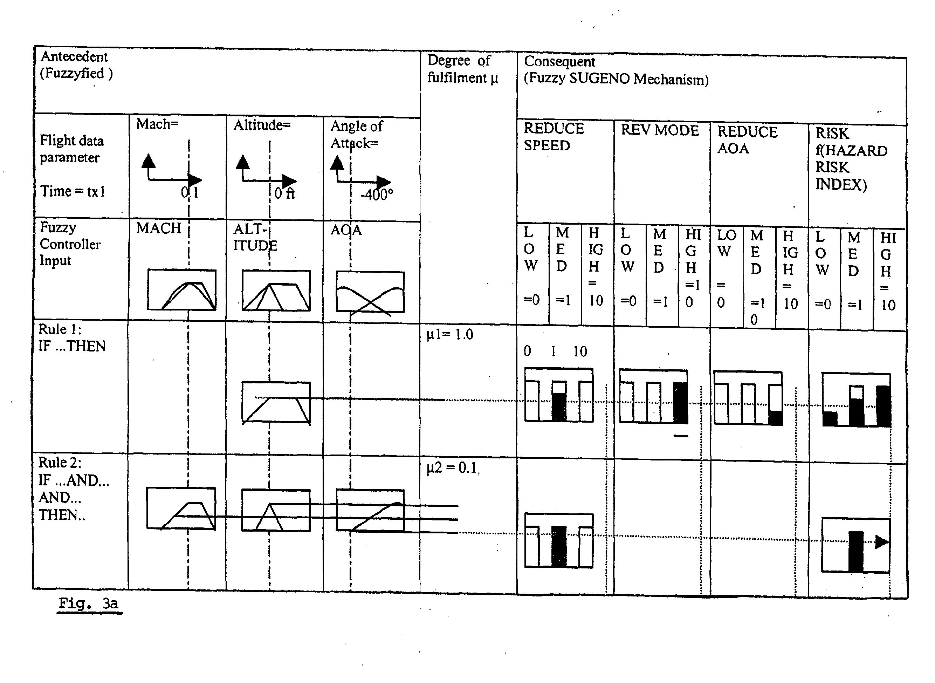

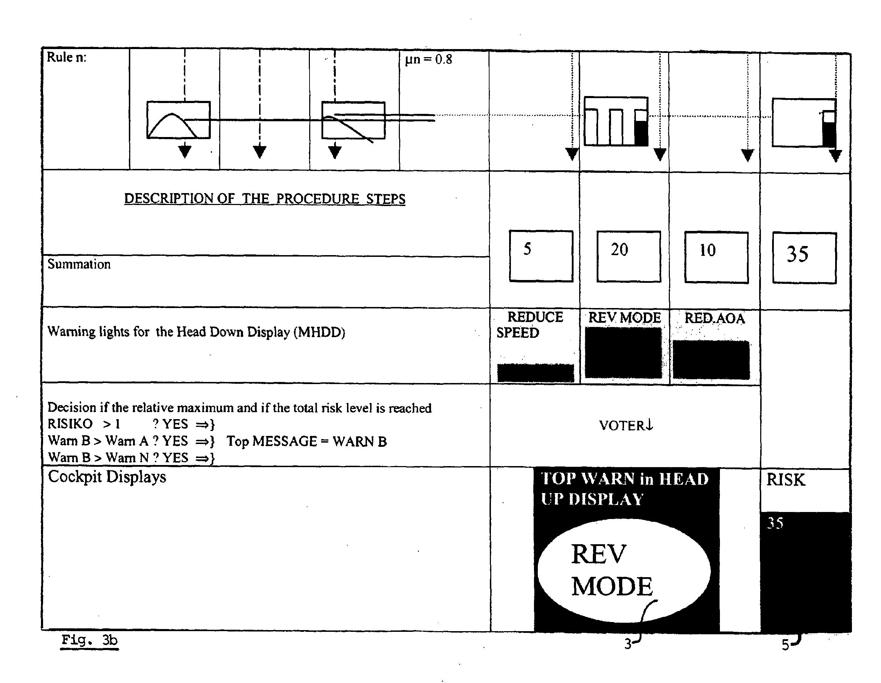

Das in Fig.3 gezeigte Beispiel für die Generierung einer Top Level Warnung zeigt, wie mittels dem Fuzzy SUGENO Mechanismus aus ermittelten Einzelrisiken der Gesamtrisikolevel 5 und die Handlungsanweisung 3 - "REV MODE" - ermittelt wird. Dabei verwendete Eingangsdaten sind die Flugdatenparameter Mach, Altitude und Angle of Attack.

**Patentansprüche**

1.  Rechnergestütztes Flugkontrollsystem zur Installation im Cockpit eines Flugzeugs, welches die an Bord ermittelten Flugparameterdaten selbsttätig kontinuierlich auswertet und ein Display zur Anzeige von aus der Auswertung ermittelten Informationen für den Piloten umfasst,
    wobei das Flugkontrollsystem einen Computer umfasst, welcher in das Flugzeug implementiert wird und parallel zur Flugregelungdes Flugzeugs mitläuft, wobei der Computer unter Verwendung von Fuzzy Logik (2) auf der Basis von in das Flugkontrollsystem (1) implementierten Wissenbasen kontinuierlich Risikobewertungen bezüglich aktueller Flug- und Systemparameter vornimmt, wobei die Ergebnisse dieser Risikobewertungen auf dem Display(4) ausgegeben werden,
    **dadurch gekennzeichnet, dass**
    das Flugkontrollsystem für den Flugzustand relevante Einzelrisiken und daraus ein Gesamtrisiko (5) ermittelt, das auf dem Display (4) kontinuierlich als Leuchtbalken angezeigt wird, wobei das Gesamtrisiko (5) nach der Sugeno Summierungsmethode ermittelt ist.

2.  Flugkontrollsystem nach Anspruch 1, **dadurch gekennzeichnet, dass** das Flugkontrollsystem zu dem ermittelten Gesamtrisiko (5) bei Gefahr selbsttätig eine Handlungsanweisung (3) für den Piloten generiert, deren Ausführung den gefährlichen Flugzustand beenden kann.

3.  Flugkontrollsystem nach Anspruch 2, **dadurch gekennzeichnet, dass** die Handlungsanweisung (3) zusätzlich auf einem Head Up Display ausgegeben wird.

**Claims**

1.  Computer-aided flight monitoring system for installation in the cockpit of an aircraft, which automatically continuously evaluates the flight parameter data determined on board and has a display for indication of information determined from the evaluation for the pilot,

wherein the flight monitoring system has a computer which is implemented in the aircraft and runs in parallel with the aircraft flight control system, wherein the computer uses fuzzy logic (2) to carry out risk assessments continuously relating to the current flight and system parameters, on the basis of knowledge bases which are implemented in the flight monitoring system (1), wherein the results of these risk assessments are output on the display (4),

**characterized in that**

the flight monitoring system determines individual risks which are relevant for the flight state and, from there, determines an overall risk (5), which is continuously indicated on the display (4) as a light bar, wherein the overall risk (5) is determined using the Sugeno summation method.

2. Flight monitoring system according to Claim 1, **characterized in that** the flight monitoring system automatically generates a handling instruction (3), for the pilot, relating to the determined overall risk (5), in the event of danger, the implementation of which handling instruction (3) can end the dangerous flight state.

3. Flight monitoring system according to Claim 2, **characterized in that** the handling instruction (3) is additionally output on a head up display.

**Revendications**

1. Système de contrôle de vol assisté par ordinateur, destiné à être installé dans le cockpit d'un avion, qui évalue en continu et de manière autonome les données des paramètres de vol déterminées à bord et qui comprend un affichage qui présente aux pilotes des informations déterminées à partir de l'évaluation,

le système de contrôle de vol comportant un ordinateur qui est installé dans l'avion et qui fonctionne en parallèle à la régulation de vol de l'avion, l'ordinateur entreprenant en continu une évaluation du risque sur les paramètres actualisés du vol et du système en utilisant une logique floue (2) basée sur une base de connaissances installée dans le système (1) de contrôle de vol, les résultats de cette évaluation du risque étant présentés sur l'affichage (4),

**caractérisé en ce que**

le système de contrôle de vol détermine des risques distincts de l'état de vol et en déduit un risque global (5) qui est présenté en permanence sur l'affichage (4) sous la forme d'une barre lumineuse, le risque global (5) étant déterminé en appliquant la méthode de sommation de Sugeno.

2. Système de contrôle de vol selon la revendication 1, **caractérisé en ce que** lorsque le risque global (5) déterminé indique un danger, le système de contrôle de vol génère automatiquement pour les pilotes une indication (3) de manoeuvres dont l'exécution doit terminer la situation de vol dangereuse.

3. Système de contrôle de vol selon la revendication 2, **caractérisé en ce que** l'indication de manoeuvre (3) est en outre présentée sur un affichage tête haute.

**2**

**3**

aircraft flight
safety level

u1

R1 if ...then

R2 if ...then

R3 if ...then

go to
rev3 mode

u n

air data transducer
safety level

overall safety level ⇨ cockpit warning

**1**

## Fig. 1

Fig. 2

12

| Antecedent (Fuzzyfied) | | | | Degree of fulfilment μ | Consequent (Fuzzy SUGENO Mechanism) | | | |
|---|---|---|---|---|---|---|---|---|
| Flight data parameter<br><br>Time = tx1 | Mach=<br><br>0.1 | Altitude=<br><br>0 ft | Angle of Attack=<br><br>-400° | | REDUCE SPEED | REV MODE | REDUCE AOA | RISK f(HAZARD RISK INDEX) |
| Fuzzy Controller Input | MACH | ALT-ITUDE | AOA | | LOW =0 / MED =1 / HIGH =10 | LOW =0 / MED =1 / HIGH =10 | LOW =0 / MED =10 / HIGH =10 | LOW =0 / MED =1 / HIGH =10 |
| Rule 1: IF ...THEN | | | | μ1= 1.0 | 0  1  10 | | | |
| Rule 2: IF ...AND... AND... THEN.. | | | | μ2 = 0.1, | | | | |

Fig. 3a

| Rule n: | | | | $\mu n = 0.8$ | | | | | |
|---|---|---|---|---|---|---|---|---|---|

| DESCRIPTION OF THE PROCEDURE STEPS | | | | |
|---|---|---|---|---|
| Summation | 5 | 20 | 10 | 35 |

| Warning lights for the Head Down Display (MHDD) | REDUCE SPEED | REV MODE | RED.AOA | |
|---|---|---|---|---|

| Decision if the relative maximum and if the total risk level is reached<br>RISIKO > 1 ? YES ⇒}<br>Warn B > Warn A ? YES ⇒} Top MESSAGE = WARN B<br>Warn B > Warn N ? YES ⇒} | VOTER↓ | |
|---|---|---|
| Cockpit Displays | TOP WARN in HEAD UP DISPLAY<br><br>REV MODE | RISK<br>35 |

Fig. 3b

3

5

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 5983161 A

### In der Beschreibung aufgeführte Nicht-Patentliteratur

- **HUNGENAHALLY S.K.** Virtual cockpit:fuzzy neural networks in visual perception. *IEEE INTERNATIONAL CONFERENCE IN NEURAL NETWORKS PROCEEDINGS PERTH, WA, AUSTRA-LIA,* 27. November 1995, vol. 1, 27-31